(19) Europäisches Patentamt
European Patent Office
Office européen des brevets

(11) **EP 4 081 744 B1**

(12) **EUROPEAN PATENT SPECIFICATION**

(45) Date of publication and mention
of the grant of the patent:
**25.10.2023 Bulletin 2023/43**

(21) Application number: **19836499.4**

(22) Date of filing: **23.12.2019**

(51) International Patent Classification (IPC):
***F25B 21/00*** *(2006.01)*

(52) Cooperative Patent Classification (CPC):
**F25B 21/00;** F25B 2321/0021; Y02B 30/00

(86) International application number:
**PCT/EP2019/086955**

(87) International publication number:
**WO 2021/129928 (01.07.2021 Gazette 2021/26)**

(54) **APPARATUS FOR MAGNETIC COOLING AND HOUSEHOLD APPLIANCE**

VORRICHTUNG ZUR MAGNETISCHEN KÜHLUNG UND HAUSHALTSGERÄT

APPAREIL DE REFROIDISSEMENT MAGNÉTIQUE ET APPAREIL MÉNAGER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.11.2022 Bulletin 2022/44**

(73) Proprietor: **Vestel Elektronik Sanayi ve Ticaret A.S.
45030 Manisa (TR)**

(72) Inventors:
• **YALIN, Nevzat
45030 Manisa (TR)**
• **USLU, Mutlu
45030 Manisa (TR)**

(74) Representative: **Maikowski & Ninnemann
Patentanwälte Partnerschaft mbB
Postfach 15 09 20
10671 Berlin (DE)**

(56) References cited:
WO-A1-2016/109805        AU-B2- 619 838
US-A- 4 704 871              US-A- 5 381 664
US-A1- 2015 211 771

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD**

Embodiments of the present disclosure relate to an apparatus for magnetic cooling, a household appliance having the apparatus, and a method for magnetic cooling. The embodiments of the present disclosure particularly relate to a cryogen-free cooling for a refrigerator, freezer or air conditioner.

**BACKGROUND**

A commonly used refrigerator or freezer has a thermally insulated compartment and a heat pump which transfers heat from the inside of the thermally insulated compartment to an external environment so that the inside of the thermally insulated compartment is cooled to a temperature below the room temperature. The heat pump generally includes a cooling medium, a compressor, an evaporator, and a condenser to provide the cooling effect. The heat pump is therefore a complex system.

In view of the above, new cooling apparatuses, household appliances having the apparatus, and cooling methods that overcome at least some of the problems in the art are beneficial.

WO 2016/109805 A1 is directed to a fluid connection including a plurality of flexible polymeric tubes; an integral fluid connector coupled to and in fluid communication with each of the plurality of tubes; and a shell disposed over and encapsulating the fluid connector. The fluid connection surprisingly exhibiting significant increases in the working pressure, particularly in biopharmaceutical fluid transfer systems.

AU 619 838 B2 describes a duct component for use in an air distribution system for connecting a first length of ducting to a second length of ducting, the component being integrally formed of synthetic plastics material and comprising first and second, tubular portions for connection respectively, to said first and second lengths of ducting an' a hollow body portion spacing the tubular portions apart and wherein the body portion has a wall thickness of not greater than 2.5 mm and is strengthened against collapse or deformation by at least one circumferentially or longitudinally extending strengthening rib which extends outwardly on the outer surface of the body portion. US 5 381 664 A and US 4 704 871 A both relate to the field of magnetic refrigerators and disclose an apparatus for magnetic cooling according to the preamble of claim 1.

**SUMMARY**

In light of the above, an apparatus for magnetic cooling, a household appliance having the apparatus, and a method for magnetic cooling are provided.

It is an object of the present disclosure to provide a simplified and less complex cooling mechanism for a household appliance, such as a refrigerator, freezer or air conditioner. Further objects, aspects, benefits, and features of the present disclosure are apparent from the claims, the description, and the accompanying drawings.

The invention is defined by independent claim 1. Features of exemplary embodiments are defined in the dependent claims.

According to another independent aspect of the present invention, a household appliance is provided. The household appliance includes the apparatus for magnetic cooling according to the embodiments described herein.

The household appliance may be a refrigerator, a freezer, a combination of a refrigerator and a freezer, or an air conditioner.

According to another independent aspect of the present invention, a method for magnetic cooling is defined in claim 6. The method includes magnetizing two or more magnetic elements of different sizes in a first region; and moving the two or more magnetic elements from the first region to two or more second regions via two or more channels having different sizes.

Embodiments are also directed at devices for carrying out the disclosed methods and include device parts for performing each described method aspect. These method aspects may be performed by way of hardware components, a computer programmed by appropriate software, by any combination of the two or in any other manner.

**BRIEF DESCRIPTION OF THE DRAWINGS**

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1 shows a schematic view of an apparatus for magnetic cooling according to various embodiments described herein;

FIG. 2     shows a magnetic cooling procedure according to embodiments described herein; and

FIG. 3     shows a flowchart of a method for magnetic cooling according to various embodiments described herein.

## DETAILED DESCRIPTION OF EMBODIMENTS

Reference will now be made in detail to the various embodiments of the invention,

one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

Common refrigerators use a heat pump to transfer heat from the inside of a thermally insulated compartment to an external environment so that the inside of the thermally insulated compartment is cooled to a temperature below the room temperature. The heat pump generally includes a cooling medium, a compressor, an evaporator, and a condenser to provide the cooling effect. The heat pump is therefore a complex system.

The present invention provides a magnetic cooling mechanism and moveable magnetic elements to provide an efficient cooling for a household appliance, such as a refrigerator, freezer or an air conditioner. In particular, the differently sized magnetic elements are moveable between a first region ("hot region") and two or more second regions ("cold regions") via a multi-channel system. Thus, an efficient and flexible cooling mechanism is provided.

For example, no fan and corresponding motor are required because the cooling structure extends into the cabinet to multiple different locations. Further, the design is flexible because the channels can be distributed as needed. Furthermore, the cooling mechanism is simple, cost efficient, and less harmful to the environment than conventional mechanisms which use cooling media.

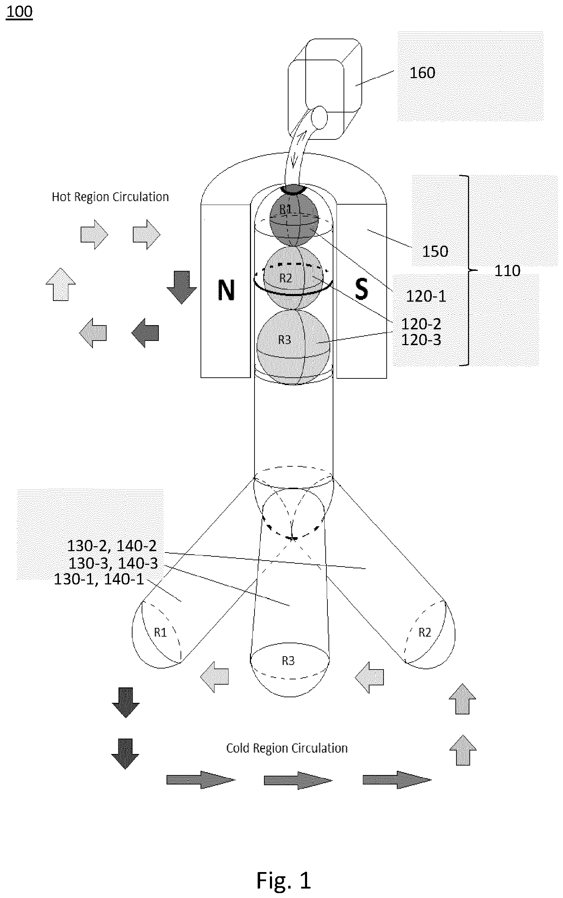

FIG. 1 shows a schematic view of an apparatus 100 for magnetic cooling according to embodiments described herein.

The apparatus 100 includes a first region 110 for magnetizing two or more magnetic elements 120-1, 120-2, 120-3 of different sizes; two or more second regions 130-1, 130-2, 130-3; and two or more channels 140-1, 140-2, 140-3 having different sizes, wherein each channel of the two or more channels 140-1, 140-2, 140-3 connects the first region 110 and a respective second region of the two or more second regions 130-1, 130-2, 130-3.

The two or more channels 140-1, 140-2, 140-3 are configured for a transport of the two or more magnetic elements 120-1, 120-2, 120-3 from the first region 110 to the two or more second regions 130-1, 130-2, 130-3 and for a transport of the two or more magnetic elements 120-1, 120-2, 120-3 from the two or more second regions 130-1, 130-2, 130-3 to the first region 110.

The apparatus 100 can be included in a household appliance, such as a refrigerator, a freezer, a combination of a refrigerator and a freezer, or an air conditioner.

The apparatus 100 further includes a magnet device 150 at the first region 110. The magnet device 150 may surround the first region 110. In some implementations, the magnet device 150 may have a hollow interior which accommodates and/or defines and/or corresponds to the first region 110 ("hot region").

In some embodiments, the magnet device 150 can include, or be, an electromagnet, such as a resistive or superconducting electromagnet, having a magnet power supply connected thereto. Alternatively, the magnet device 150 can include, or be, a permanent magnet.

The magnet device 150 is configured to magnetize the two or more magnetic elements 120-1, 120-2, 120-3 when the two or more magnetic elements 120-1, 120-2, 120-3 are in the first region 110. For example, the two or more magnetic elements include, or are made of, a paramagnetic material, such as a paramagnetic metal or a paramagnetic salt.

The magnet device 150 may be configured to provide (and remove) a magnetic field at the position of the two or more magnetic elements 120-1, 120-2, 120-3 in the first region 110 to magnetize the two or more magnetic elements 120-1, 120-2, 120-3.

Magnetic cooling, such as adiabatic demagnetization refrigeration (ADR), is a cooling technology based on the magnetocaloric effect. Adiabatic demagnetization refrigeration uses the entropy-dependence of a paramagnetic spin system (e.g. the magnetic moments due to the electronic orbital motion and electron spin, or nuclear spins) to provide a cooling effect.

A thermodynamic cycle of adiabatic demagnetization refrigeration includes the steps of adiabatic magnetization, isomagnetic enthalpic transfer, and adiabatic demagnetization. The adiabatic magnetization and isomagnetic enthalpic transfer are carried out in the first or hot region 110 using the magnetic field of the magnet device 150. The adiabatic demagnetization (i.e., cooling) is carried out when the two or more magnetic elements 120-1, 120-2, 120-3 move from the first region 110 to the two or more second or cold regions 130-1, 130-2, 130-3 and/or when the two or more magnetic elements 120-1, 120-2, 120-3 are located in the two or more second regions 130-1, 130-2, 130-3.

According to some examples, which are not part of the present invention, the two or more magnetic elements 120-1, 120-2, 120-3 are spheres. The spheres may have different sizes/diameters and different masses/weights.

For example, a first spherical magnetic element 120-1 may have a first radius R1 and a first weight (or first mass M1). A second spherical magnetic element 120-2 may have a second radius R2 and a second weight (or second mass M2). A third spherical magnetic element 120-3 may have a third radius R3 and a third weight (or third mass M3).

The first radius R1 may be the smallest radius and the first mass M1 may be the smallest mass. Thus, the following may apply:

$$R1 < R2 < R3 \qquad \text{and} \qquad M1 < M2 < M3$$

The different sizes of the two or more magnetic elements 120-1, 120-2, 120-3 ensure that a particular magnetic element is moved to a particular second region via a particular channel. The different weights/masses of the two or more magnetic elements 120-1, 120-2, 120-3 allow to arrange the two or more magnetic elements 120-1, 120-2, 120-3 in a particular order in the first region 110, as it is exemplary illustrated in FIG. 1. For example, the lightest and/or smallest magnetic element may be located at the top of the (vertical) arrangement of magnetic elements in the first region 110.

In some implementations, which are not part of the present invention, the two or more magnetic elements 120-1, 120-2, 120-3 are three magnetic elements and the two or more channels 140-1, 140-2, 140-3 are three channels. According to the examples, which are not part of the present invention, any suitable number of magnetic elements and corresponding channels can be provided e.g. according to design considerations of a household appliance such as a refrigerator or air conditioner.

According to some embodiments, which can be combined with other embodiments described herein, the first region 110 is essentially tubular. The essentially tubular first region 110 may have a diameter adaptable to essentially corresponding to a size of a biggest magnetic element of the two or more magnetic elements 120-1, 120-2, 120-3.

According to a further example, which is not part of the present invention, a size of a respective channel of the two or more channels 140-1, 140-2, 140-3 essentially corresponds to a size of the respective magnetic element which is transported therein from the first region 110 to the respective second region and vice versa. For example, the two or more channels 140-1, 140-2, 140-3 may be essentially tubular and have a diameter which essentially corresponds to a diameter of the respective spherical magnetic element which is transported therein from the first region 110 to the respective second region and vice versa.

The two or more channels 140-1, 140-2, 140-3 may branch off from the first region 110. In some implementations, the first region 110 and the two or more channels 140-1, 140-2, 140-3 configure a (e.g. closed) tube system or pipe system.

The two or more second regions 130-1, 130-2, 130-3 may be located at (or correspond to) end portions of the two or more channels 140-1, 140-2, 140-3. In particular, the two or more channels 140-1, 140-2, 140-3 may be closed at an end thereof such that the two or more magnetic elements 120-1, 120-2, 120-3 are held in position at the end portions. A space or region occupied by a magnetic element when it abuts against the closed end portion of its channel may be defined as the corresponding second region.

In some implementations, the end portions of the two or more channels 140-1, 140-2, 140-3 may have a shape corresponding to a shape of the two or more magnetic elements 120-1, 120-2, 120-3 to improve a heat transfer and thus cooling efficiency. For example, the end portions of the two or more channels 140-1, 140-2, 140-3 may each have an essentially circular, an essentially semi-circular, or an oval shape.

According to some examples, which are not part of the present invention, the apparatus 100 further includes a transport device 160 configured to move or transport the two or more magnetic elements 120-1, 120-2, 120-3 from the two or more second regions 130-1, 130-2, 130-3 to the first region 110 and from the first region 110 to the two or more second regions 130-1, 130-2, 130-3.

For example, the transport device 160 may be configured to move the two or more magnetic elements 120-1, 120-2, 120-3 from the two or more second regions 130-1, 130-2, 130-3 to the first region 110 using a suction force. Further, the transport device 160 may be configured to move the two or more magnetic elements 120-1, 120-2, 120-3 from the first region 110 to the two or more second regions 130-1, 130-2, 130-3 by turning off the suction force and/or by using a blowing force. The suction force and the blowing force act in opposite directions.

In some implementations, which are not part of the present invention, the transport device 160 may be a pump, such as a two-way pump and/or an air pump. The transport device 160 may be connected to the first region 110 to effect the movement of the two or more magnetic elements 120-1, 120-2, 120-3 between the first region 110 and the two or more second regions 130-1, 130-2, 130-3.

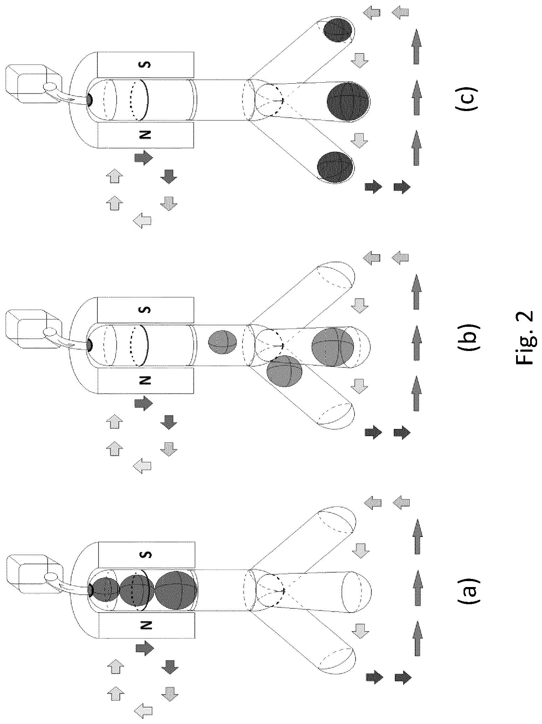

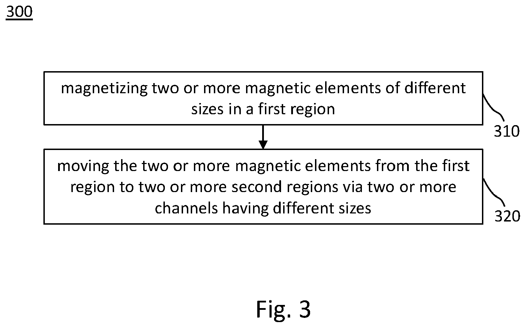

FIG. 2 shows a magnetic cooling procedure according to embodiments described herein. FIG. 3 shows a flowchart of a method 300 for magnetic cooling according to embodiments described herein.

The method 300 includes in block 310 a magnetizing of two or more magnetic elements of different sizes in a first region; and in block 320 a moving of the two or more magnetic elements from the first region to two or more second regions via two or more channels having different sizes.

Referring to FIG. 2 (a), the transport device, which may be an air pump, pulls the magnetic elements to the first region inside of the magnet device, which may be a permanent magnet. The magnetic elements are arranged according to their mass, with the lightest magnetic element being at the top of the arrangement of magnetic elements.

The magnetic field of the permanent magnet is used for an adiabatic magnetization and isomagnetic enthalpic transfer in the first or hot region. In other words, the magnetic elements are magnetized by the magnetic field and thermal energy is removed from the magnetic elements and transferred to a surrounding thereof, e.g. by circulating a fluid such as air.

Thereafter, as it is illustrated in FIG. 2 (b), the direction of the force provided by the air pump is reversed and the differently sized magnetic elements move from the first region to respective second regions via the differently sized channels.

During and/or after the movement of the differently sized magnetic elements from the first region to respective second regions via the differently sized channels, adiabatic demagnetization (i.e., cooling) occurs. Thermal energy is transferred from the second regions to the magnetic elements and the magnetic elements are demagnetized (FIG. 2 (c)). The transfer of thermal energy leads to a temperature drop in the second regions, which may be located in a cabinet of a refrigerator. Thereby, the inside of the refrigerator can be cooled.

Then, the magnetic elements can be pulled into the first region again by means of the air pump and the above aspects illustrated in FIGs 2 (a)-(c) can be repeated as a cycle to provide a continuous cooling mechanism.

The present disclosure provides a magnetic cooling mechanism and moveable magnetic elements to provide an efficient cooling for a household appliance, such as a refrigerator, freezer or an air conditioner. In particular, the differently sized magnetic elements are moveable between a first region ("hot region") and two or more second regions ("cold regions") via a multi-channel system. Thus, an efficient and flexible cooling mechanism is provided.

For example, no fan and corresponding motor are required because the cooling structure extends into the cabinet to multiple different locations. Further, the design is flexible because the channels can be distributed as needed. Furthermore, the cooling mechanism is simple, cost efficient, and less harmful to the environment than conventional mechanisms which use cooling media.

While the foregoing is directed to embodiments of the invention, other and further embodiments of the invention may be devised without departing from the basic scope thereof, and the scope thereof is determined by the claims that follow.

**Claims**

1. An apparatus (100) for magnetic cooling, comprising:

   a first region (110) for magnetizing two or more magnetic elements (120-1, 120-2, 120-3) of different sizes; and a magnet device (159) at the first region (110), wherein the magnet device (150) is configured to magnetize the two or more elements (120-1, 120-2, 120-3); the apparatus (100) being **characterized by** including two or more second regions (130-1, 130-2, 130-3); and two or more channels (140-1, 140-2, 140-3) having different sizes, wherein each channel of the two or more channels (140-1, 140-2, 140-3) connects the first region (110) and a respective second region of the two or more second regions (130-1, 130-2, 130-3), and wherein the two or more channels (140-1, 140-2, 140-3) are configured for a transport of the two or more magnetic elements (120-1, 120-2, 120-3) from the first region (110) to the two or more second regions (130-1, 130-2, 1 130-3).

2. The apparatus (100) of claim 1, wherein the magnet device (150) surrounds the first region (110).

3. The apparatus (100) of claim 1 or 2, wherein the first region (110) is essentially tubular and has a diameter adaptable to essentially corresponding to a size of a biggest magnetic element of the two or more magnetic elements (120-1, 120-2, 120-3).

4. The apparatus (100) of any one of claims 1 to 3, wherein the two or more channels (140-1, 140-2, 140-3) branch off from the first region (110).

5. Household appliance, including the apparatus (100) of any one of claims 1 to 4.

**6.** Method for magnetic cooling, comprising:

magnetizing (310) two or more magnetic elements of different sizes in a first region; and
moving (320) the two or more magnetic elements from the first region to two or more second regions via two or more channels having different sizes.

**Patentansprüche**

**1.** Vorrichtung (100) zur magnetischen Kühlung, die Folgendes umfasst:

eine erste Region (110) zum Magnetisieren von zwei oder mehr magnetischen Elementen (120-1, 120-2, 120-3) unterschiedlicher Größen; und
eine Magnetvorrichtung (159) an der ersten Region (110), wobei die Magnetvorrichtung (150) ausgelegt ist zum Magnetisieren der zwei oder mehr Elemente (120-1, 120-2, 120-3); wobei die Vorrichtung (100) **dadurch gekennzeichnet ist, dass** sie zwei oder mehr zweite Regionen (130-1, 130-2, 130-3) umfasst; und
zwei oder mehr Kanäle (140-1, 140-2, 140-3) mit unterschiedlichen Größen, wobei jeder Kanal der zwei oder mehr Kanäle (140-1, 140-2, 140-3) die erste Region (110) und eine entsprechende zweite Region der zwei oder mehr zweiten Regionen (130-1, 130-2, 130-3) verbindet, und
wobei die zwei oder mehr Kanäle (140-1, 140-2, 140-3) ausgelegt sind für einen Transport der zwei oder mehr magnetischen Elemente (120-1, 120-2, 120-3) von der ersten Region (110) zu den zwei oder mehr zweiten Regionen (130-1, 130-2, 130-3).

**2.** Vorrichtung (100) nach Anspruch 1, wobei die Magnetvorrichtung (150) die erste Region (110) umgibt.

**3.** Vorrichtung (100) nach Anspruch 1 oder 2, wobei die erste Region (110) im Wesentlichen röhrenförmig ist und einen Durchmesser aufweist, der anpassbar ist, um im Wesentlichen einer Größe eines größten magnetischen Elements der zwei oder mehr magnetischen Elemente (120-1, 120-2, 120-3) zu entsprechen.

**4.** Vorrichtung (100) nach einem der Ansprüche 1 bis 3, wobei die zwei oder mehr Kanäle (140-1, 140-2, 140-3) von der ersten Region (110) abzweigen.

**5.** Haushaltsgerät, umfassend die Vorrichtung (100) nach einem der Ansprüche 1 bis 4.

**6.** Verfahren zur magnetischen Kühlung, das Folgendes umfasst:

Magnetisieren (310) von zwei oder mehr magnetischen Elementen unterschiedlicher Größen in einer ersten Region; und
Bewegen (320) der zwei oder mehr magnetischen Elemente von der ersten Region in zwei oder mehr zweite Regionen über zwei oder mehr Kanäle mit unterschiedlichen Größen.

**Revendications**

**1.** Dispositif (100) pour refroidissement magnétique, comprenant :

une première région (110) pour magnétiser deux, ou plus, éléments magnétiques (120-1, 120-2, 120-3) de tailles différentes ; et
un organe aimant (159) dans la première région (110), dans lequel l'organe aimant (150) est configuré pour magnétiser les deux, ou plus, éléments (120-1, 120-2, 120-3) ; le dispositif (100) étant **caractérisé en ce qu'**il inclut deux, ou plus, secondes régions (130-1, 130-2, 130-3) ; et
deux, ou plus, canaux (140-1, 140-2, 140-3) ayant des tailles différentes, dans lequel chaque canal des deux, ou plus, canaux (140-1, 140-2, 140-3) raccorde la première région (110) et une seconde région respective des deux, ou plus, secondes régions (130-1, 130-2, 130-3), et
dans lequel les deux, ou plus, canaux (140-1, 140-2, 140-3) sont configurés pour un transport des deux, ou plus, éléments magnétiques (120-1, 120-2, 120-3) depuis la première région (110) jusqu'aux deux, ou plus, secondes régions (130-1, 130-2, F130-3).

**2.** Dispositif (100) selon la revendication 1, dans lequel l'organe aimant (150) entoure la première région (110).

**3.** Dispositif (100) selon la revendication 1 ou 2, dans lequel la première région (110) est essentiellement tubulaire et a un diamètre adaptable pour essentiellement correspondre à une taille d'un élément magnétique le plus grand des deux, ou plus, éléments magnétiques (120-1, 120-2, 120-3).

**4.** Dispositif (100) selon l'une quelconque des revendications 1 à 3, dans lequel les deux, ou plus, canaux (140-1, 140-2, 140-3) sont ramifiés à partir de la première région (110).

**5.** Appareil ménager, incluant le dispositif (100) de l'une quelconque des revendications 1 à 4.

**6.** Procédé pour refroidissement magnétique, comprenant :

la magnétisation (310) de deux, ou plus, éléments magnétiques de tailles différentes dans une première région ; et
le déplacement (320) des deux, ou plus, éléments magnétiques depuis la première région jusqu'à deux, ou plus, seconde régions par l'intermédiaire de deux, ou plus, canaux ayant des tailles différentes.

100

Hot Region Circulation

N    S

160

150

110

120-1

120-2
120-3

130-2, 140-2
130-3, 140-3
130-1, 140-1

R1

R2

R3

Cold Region Circulation

Fig. 1

Fig. 2

300

| magnetizing two or more magnetic elements of different sizes in a first region |
|---|

310

| moving the two or more magnetic elements from the first region to two or more second regions via two or more channels having different sizes |
|---|

320

Fig. 3

**REFERENCES CITED IN THE DESCRIPTION**

**Patent documents cited in the description**

- WO 2016109805 A1
- AU 619838 B2
- US 5381664 A
- US 4704871 A